Europäisches Patentamt

European Patent Office

Office européen des brevets

(11) Veröffentlichungsnummer: **0 350 906**

**A2**

## (12) EUROPÄISCHE PATENTANMELDUNG

(21) Anmeldenummer: **89112796.1**

(22) Anmeldetag: **13.07.89**

(51) Int. Cl.4: **B01D 17/00 , B01D 17/12**

(30) Priorität: **14.07.88 DE 8809056 U**

(43) Veröffentlichungstag der Anmeldung:
**17.01.90 Patentblatt 90/03**

(84) Benannte Vertragsstaaten:
**AT BE CH DE ES FR GB IT LI NL SE**

(71) Anmelder: **Winkelhorst, Stephan**
**Unterbuschweg 150**
**D-5000 Köln 50(DE)**

(72) Erfinder: **Winkelhorst, Stephan**
**Unterbuschweg 150**
**D-5000 Köln 50(DE)**

(74) Vertreter: **Selting, Günther, Dipl.-Ing. et al**
**Patentanwälte von Kreisler, Selting, Werner**
**Deichmannhaus am Hauptbahnhof**
**D-5000 Köln 1(DE)**

(54) **Ringkammer-Abscheider.**

(57) Der Ringkammer-Abscheider weist über dem Ringkammersystem (50) eine Heizvorrichtung (26) auf, durch die nur die leichte Phase beheizt wird. Außerhalb des Gehäuses (12) sind frei aufragende Auslaßleitungen (16, 18) vorgesehen, in denen die leichte und die schwere Phase aufsteigen. Mindestens eine der Auslaßleitungen (16,18) weist eine Niveauregelungsvorrichtung (38) auf, um den Höhenunterschied zwischen den Austrittsöffnungen (28, 30) verändern zu können. Entsprechend diesem Höhenunterschied stellt sich die Trennschicht zwischen den Phasen im Inneren des Behälters (12) ein.

EP 0 350 906 A2

### Ringkammer-Abscheider

Die Erfindung betrifft einen Ringkammer-Abscheider zum Trennen eines Flüssigkeitsgemisches aus zwei Phasen unterschiedlicher Dichte, insbesondere zum Abscheiden einer organischen Phase aus wässrigem Gemisch, mit einem Gehäuse, in dem mehrere ineinander geschachtelte Ringkammern ausgebildet sind, die einen mehrfach richtungswechselnden Strömungsweg für die zu trennende Flüssigkeit definieren, einer Zuführleitung für die zu trennende Flüssigkeit, einer mit dem Kopfbereich des Gehäuses verbundenen Auslaßleitung für die sich dort sammelnde Phase geringerer Dichte und einer mit dem unteren Bereich des Gehäuses verbundenen Auslaßleitung für die sich dort sammelnde Phase größerer Dichte, sowie mit wenigstens einem im Gehäuse angeordneten Heizelement.

Solche Ringkammer-Abscheider sind beispielsweise aus der DE-A- 25 40 264 bekannt und dienen insbesondere im Bereich der Schiffahrt als Ölabscheider, beispielsweise für Bilgenwasser.

Das zu trennende Flüssigkeitsgemisch, beispielsweise ölverunreinigtes Wasser, wird von einer Pumpe in den Abscheider eingeführt, der meist als ein zylindrisches Gehäuses mit darin aufgenommenen, ineinander geschachtelten und ebenfalls zylindrischen Ringkammern ausgebildet ist. Die konzentrisch liegenden Ringkammern werden von Rohrabschnitten gebildet, die alternierend oberseitig bzw. unterseitig im wesent lichen geschlossen, am anderen Ende aber offen sind. Das Flüssigkeitsgemisch wird durch eine Gehäuseöffnung zugeführt und strömt dann einwärts durch die Ringkammern, wobei es jeweils an den offenen Enden der Rohrabschnitte einen Richtungswechsel erfährt. Zu dieser, vereinfachend gesagt, in vertikaler Richtung zick-zack-förmigen Strömung tritt eine Bewegungskomponente in Umfangsrichtung des Gehäuses hinzu, die durch tangentiale Einleitung der Flüssigkeit in das Gehäuse bewirkt wird. Beim Durchströmen des Abscheiders beruhigt sich die Flüssigkeit zunehmend. Unter der Einwirkung der Schwerkraft separieren sich die unterschiedlioh dichten Phasen; die leichtere Phase, beispielsweise die Ölkomponente, schwimmt auf und sammelt sich im Kopfbereich des Gehäuses, während die dichtere Phase, beispielsweise Wasser, sich darunter sammelt.

Die getrennten Phasen werden über Auslaßleitungen aus dem Gehäuse abgegeben. Die Auslaßleitung für die Phase geringerer Dichte setzt am Kopfbereich des Gehäuses an, während die Auslaßleitung für die Phase größerer Dichte vom unteren Bereich, insbesondere vom Boden des Gehäuses wegführt. Eine mit Heizfluid beaufschlagbare Heizschlange ist in der in radialer Richtung äußersten Ringkammer vorgesehen und verläuft von einer Eintrittsstelle nahe dem Kopfbereich des Gehäuses bis zu einer Austrittsstelle nahe seinem unteren Bodenbereich wendelartig durch die äußerste Ringkammer.

Diese bekannten Abscheider werden unter Druck betrieben. Den Druck erzeugt die Zuführpumpe für das Flüssigkeitsgemisch; zur Aufrechterhaltung des Druckes sind beide Auslaßleitungen mit Ventilen versehen, von denen im Trennbetrieb stets nur eines geöffnet ist. Das Ventil in der Auslaßleitung für die Phase geringerer Dichte bleibt zunächst geschlossen, während sich diese Phase im Kopfbereich des Gehäuses sammelt. In einigem Abstand unterhalb des höchsten Punktes dieses Kopfbereiches sitzt im Gehäuse eine Elektrodenanordnung, durch die die Leitfähigkeit der Flüssigkeit erfaßt werden kann, welche die Elektroden umgibt. Die Phasen unterscheiden sich in ihrer Leitfähigkeit so, daß mittels der Elektroden bestimmt werden kann, in welche der Phasen die Elektroden gerade eintauchen und damit, ob sich die Phasengrenzfläche oberhalb oder unterhalb der Elektroden befindet.

Das Ventil in der Auslaßleitung für die Phase geringerer Dichte bleibt nun so lange geschlossen, bis sich so viel von dieser Phase im Kopfbereich angesammelt hat, daß die Phasengrenzfläche bis zu den Elektroden abgesunken ist. Die sich dann ergebende Leitfähigkeitsänderung wird erfaßt und in Ansprache darauf wird das Ventil geöffnet. Eine Zeitverzögerungsschaltung in der Ventilsteuerung verhindert, daß das Ventil sich sofort wieder schließt, wenn die Phasengrenze oberhalb der Elektroden liegt; dadurch kann die Phase geringerer Dichte weitgehend aus dem Kopfbereich abfließen, bis das Ventil in der Auslaßleitung schließt.

Das andere Ventil in der Auslaßleitung für die Phase größerer Dichte ist jeweils dann geöffnet, wenn das erstgenannte Ventil in der Auslaßleitung für die Phase geringerer Dichte geschlossen ist; ist dieses erstgenannte Ventil jedoch geöffnet, dann ist das andere Ventil geschlossen. Durch dieses Geschlossensein jeweils eines der Ventile wird ein Druckabfall im Abscheider vermieden.

Bei dem typischen Einsatz der bekannten Abscheider in der Schiffahrt sind oft Flüssigkeitsgemische aufzuarbeiten, die durch Schwerölbestandteile verunreinigt sind. Solche Flüssigkeitsgemische enthalten meist auch teerartige organische Komponenten, die bei den üblichen Einlaßtemperaturen des Flüssigkeitsgemisches fest sind. Die bei den bekannten Abscheidern vorgesehene Heizschlange dient dazu, das Flüssigkeitsgemisch so weit zu erwärmen (üblicherweise auf maximal 50°C), daß diese Bestandteile schmelzen bzw. sich in der flüssigen organischen Phase (Öl o.dgl.) auflösen. Ohne eine solche Verflüssigung der Festbestandteile könnte das Ventil in der Auslaßleitung für die Ölbestandteile verstopfen; außerdem ergeben sich durch solche Festbestandteile erhebliche Verschmutzungsprobleme in allen Teilen des Abscheiders.

Diese bekannten Abscheider haben sich auf ihrem speziellen Anwendungsgebiet in der Schiffahrt durchaus bewährt; sie weisen jedoch noch einige Nachteile auf.

Zum einen ist die Ausrüstung der bekannten Abscheider mit Absperrventilen in den Auslaßleitungen aufwendig und bedingt eine häufige Wartung und auch Instand setzung der Abscheider. Unerwünschten Aufwand hinsichtlich Herstellung wie auch Wartung und Reparatur bedingt in noch größerem Maße die im Gehäuse eingebaute und damit nur schwer zugängliche Elektrodenanordnung für die Ventilsteuerung.

Außerdem lassen sich die bekannten Abscheider auf anderen Gebieten als bei der Ölabscheidung auf Schiffen nur sehr begrenzt einsetzen. Einem Einsatz als Abscheider beispielsweise in der Industrie, insbesondere zum Abscheiden organischer Lösungsmittel, Öle, Fette u.dgl. aus Betriebsablaugen und ähnlichen chemisch agressiven wässrigen Gemischen steht insbesondere die relativ große Empfindlichkeit der Elektrodenanordnung für die Ventilsteuerung entgegen. Für andere Anwendungszwecke außerhalb von Schiffen ist ein bekannter Abscheider mit leitfähigkeitsgesteuerter Ventilbetätigung zu aufwendig.

Außerdem ergeben für solche Anwendungen gelegentlich Probleme hinsichtlich der Trennleistung; viele Flüssigkeitsgemische trennen sich aufgrund ungünstiger Dichteverhältnisse nur langsam, was zu unvollständiger Abscheidung führen kann. Eine solche unvollständige Abscheidung kann aber für viele industrielle Anwendungen nicht akzeptiert werden, da aufgrund einschlägiger gesetzlicher Vorschriften bzw. Verordnungen Höchstgrenzen für die jeweils in einer Phase verbleibende Restmenge der abzutrennenden anderen Phase einzuhalten sind. Solche Höchstgrenzen liegen üblicherweise im Bereich einiger Prozent.

Aufgabe der Erfindung ist es daher, einen bekannten Ringkammer-Abscheider der eingangs genannten Art so zu verbessern, daß er bei wesentlich einfacherem Aufbau und verringerter Störanfälligkeit für eine vergrößerte Zahl von Anwendungen geeignet ist.

Zur Lösung dieser Aufgabe dienen bei einem gattungsgemäßen Ringkammer-Abscheider erfindungsgemäß die kennzeichnenden Merkmale des Hauptanspruchs.

Vorteilhafte Ausgestaltungen sind in den Unteransprüchen definiert.

Die Erfindung ersetzt in besonders vorteilhafter Weise die beim Stand der Technik vorhandenen aufwendigen Ventilsteuerungsvorrichtungen durch eine einfache Niveauregelungsvorrichtung, die ohne korrosions- und verstopfungsanfällige Mittel arbeitet. Die Niveauregelungsvorrichtung macht sich stattdessen den Dichteunterschied zwischen den getrennten Phasen zunutze; im Dauerbetrieb bedarf sie nur einer einmaligen anfänglichen Einstellung des Höhenunterschiedes zwischen den Austrittsöffnungen der Auslaßleitungen. Dadurch wird ein Druckunterschied erzeugt, der bewirkt, daß beide Phasen mit gleicher Austrittsrate den Abscheider verlassen. So kann der Abscheider drucklos betrieben werden und enthält im Betrieb immer etwa konstante Mengen der beiden getrennten Phasen. Dies ermöglicht es weiterhin, den Phasengrenzbereich gezielt durch Heizelemente mit Wärme zu versorgen, was die Phasentrennung wesentlich beschleunigt. Die Vorteile, die im Stand der Technik bereits verwirklicht waren, bleiben dabei in vollem Umfang erhalten.

Vorzugsweise wird die Niveauregelungsvorrichtung einfach durch zwei in die Auslaßleitung für die leichtere Phase eingeschaltete, ineinander geschobene Rohre verwirklicht, die sich im wesentlichen in Schwerkraftrichtung erstrecken und teleskopierbar sind.

Durch mehr oder weniger starkes Einschieben des einen Rohres in das andere kann der benötigte Druckunterschied eingestellt werden. Ist dieser im Versuch einmal ermittelt worden, werden die Rohre in der entsprechenden teleskopierten Stellung festgelegt. Üblicherweise wird man dabei die Niveauregelungsvorrichtung oberhalb des Gehäuses anordnen, wo sich dann auch die Auslaßöffnungen befinden.

Die Heizelemente werden vorzugsweise von elektrischen Heizstäben oder Heizschlangen gebildet, die sich im Phasengrenzbereich senkrecht zur Vertikalachse des Gehäuses erstrecken. Durch die einmal gewählte Einstellung der Niveauregelungsvorrichtung liegt die Position dieses Phasengrenzbereiches im Gehäuse in engen Grenzen fest und der Phasengrenzbereich wandert nicht in vertikaler Richtung hin und her, wie bei dem bekannten Abscheider. Die Heizelemente können daher gerade den Phasengrenzbereich gezielt kontinuierlich erwärmen und die Trennung des Gemisches dadurch stark beschleunigen.

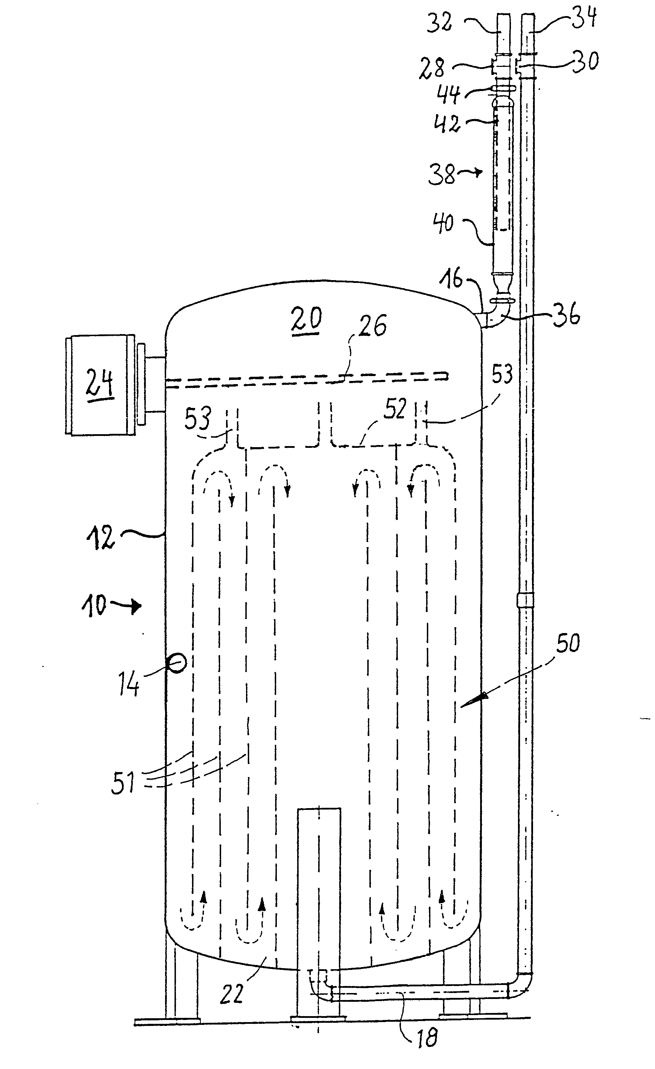

Im folgenden wird eine bevorzugte Ausführungsform der Erfindung anhand der beigefügten Zeichnung eines erfindungsgemäßen Ringkammer-Abscheiders näher erläutert.

Die Zeichnung zeigt einen Ringkammer-Abscheider 10 mit einem im wesentlichen zylindrischen Gehäuse 12, das ober- und unterseitig abgeschlossen ist. Eine Zuführleitung 14 führt in der unteren Gehäusehälfte tangential in das Gehäuse 12 und leitet das zu trennende Flüssigkeitsgemisch in ein Ringkammersystem, das einen mehrfach richtungswechselnden Strömungsweg für das Flüssigkeitsgemisch definiert. In seinen Einzelheiten entspricht dieses Ringkammersystem dem Stand der Technik, weswegen es in der Zeichnung nicht gezeigt ist. Hinsichtlich dieser Einzelheiten wird auf DE-A-25 40 264 verwiesen, die insoweit zum Gegenstand dieser Anmeldung gemacht wird. Das Ringkammersystem weist im Behälter 12 angeordnete Einbauten 50 aus mehreren koaxialen Ringkammerwänden 51 auf, wobei die äußere Ringkammerwand 51 einen durch eine Oberwand 52 verschlossenen Raum begrenzt. An der Oberwand sind aufragende Stutzen 53 vorgesehen, durch die die leichte Phase aus der Ringkammer heraus in den Kopfbereich 20 des Behälters aufsteigt. Die schwere Phase wird dagegen von der Oberwand 52 wieder nach unten abgelenkt. Die Heizvorrichtung 20 befindet sich nur über der Oberwand 52 und oberhalb der Stutzen 53.

Die Zuführung des Flüssigkeitsgemisches erfolgt mittels einer ebenfalls nicht gezeigten Zuführpumpe.

Das Gehäuse 12 hat einen Kopfbereich 20, in dem sich die im Ringkammersystem separierte Phase geringerer Dichte in bekannter Weise sammelt. Im unteren Bereich 22 des Gehäuses 12 sammelt sich die Phase größerer Dichte. Die Phase geringerer Dichte kann eine organische Phase sein, beispielsweise aus Kohlenwasserstoffen, Ölen, Lösungsmitteln u.dgl. bestehen; die Phase größerer Dichte wird in den meisten Fällen wässrig sein und kann Betriebswasser, Ablauge, Dünnsäure oder ähnliches umfassen.

Die Phase geringerer Dichte wird vom Kopfbereich 20 über eine Auslaßleitung 16 abgegeben. Die Phase größerer Dichte wird entsprechend vom unteren Bodenbereich 22 des Gehäuses 12 über eine Auslaßleitung 18 abgegeben.

Die Zeichnung zeigt diese Auslaßleitungen versetzt, so daß der Eindruck entstehen könnte, daß beide Leitungen in radialer Richtung hintereinander liegen. Stattdessen wird man aber vorziehen, die Leitungen in Umfangsrichtung des Gehäuses 12 beabstandet nebeneinander anzuordnen.

Beide Auslaßleitungen 16,18 erstrecken sich außerhalb des Gehäuses 12, nebeneinander frei aufragend, bis oberhalb des Kopfbereiches 20. Sie münden ständig offen, ohne zwischengeschaltete Ventile o.dgl., in Austrittsöffnungen 28,30, durch welche die getrennten Phasen abfließen. Je nach den Anwendungsbedingungen fließen die Phasen in Behälter, zurück in andere Anlagenteile, oder sogar ins Freie ab. In jedem Fall erfolgt dieser Abfluß aber ohne Rückdruck (außer dem durch das Gewicht der Flüssigkeit bedingten). Oberhalb der Austrittsöffnungen 28,30 sitzen Belüftungsstutzen 32,34, über welche die Auslaßleitungen 16,18 belüftet werden.

Die Auslaßleitung 16 umfaßt einen winkelartigen Krümmer 36, auf den in Strömungsrichtung eine Niveauregelungsvorrichtung 38 folgt. Die Niveauregelungsvorrichtung 38 erstreckt sich im wesentlichen in Schwerkraftrichtung, also bei der üblichen Aufstellung des Abscheiders 10 vertikal. In dieser Richtung verläuft auch die Hauptachse des zylindrischen Gehäuses 12.

Die Niveauregelungsvorrichtung 38 umfaßt ein Mantelrohr 40, das mit seinem unteren Ende mit dem Krümmer 36 verbunden ist. Am anderen, freien Ende trägt das Mantelrohr 40 ggf. eine Muffe (nicht gezeigt) zur Verbindung mit einem Ermetorohr 42. Das Ermetorohr 42 ist mit seinem unteren Teil in das Mantelrohr 40 eingeschoben und kann teleskopartig auf- bzw. abwärts im Mantelrohr 40 verschoben werden. Oberhalb des freien Endes des Mantelrohres 40 sitzt auf dem Ermetorohr eine Ermetoverschraubung 44, durch die das Ermetorohr 42 in beliebig teleskopierter Stellung bezüglich des Mantelrohres 40 dicht mit dessen freiem Ende verschraubbar ist. Das obere, freie Ende des Ermetorohres 42 schließt an ein T-Stück an, welches die Austrittsöffnung 28 für die Phase geringerer Dichte bildet.

Zur Erzeugung eines Druckunterschiedes in den Auslaßleitungen 16,18 wird ein Höhenunterschied zwischen den Austrittsöffnungen 28,30 dadurch erzeugt, daß die Rohre 40,42 der Niveauregelungsvorrichtung 38 in entsprechenden Maße teleskopiert werden. Der Höhenunterschied wird so gewählt, daß der Gewichtsunterschied der Flüssigkeitsäulen den Dichteunterschied gerade ausgleicht, so daß die Phasengrenze im Kopfbereich 20 des Gehäuses 12 beim gleichmäßigen Abfließen der getrennten Phasen in engen Grenzen auf konstanter Höhe verbleibt. Im Betrieb kann dann eine Zufuhr von zu trennendem Flüssigkeitsgemisch über die Zuführleitung 14 erfolgen; die getrennten Phasen fließen gleichmäßig über die jeweiligen Auslaßleitungen 16,18 und Austrittsöffnungen 28,30 ab, und die Menge an Phase geringerer Dichte im Kopfbereich 20 bleibt konstant; dadurch bleibt auch die Phasengrenzfläche in ihrer einmal eingestellten Position im Gehäuse 12.

An der Außenseite des Gehäuses 12 sitzt im Kopfbereich 20 eine elektrisch betriebene Heizvorrichtung 24 mit Heizstäben 26, die sich in das Gehäuse 12 hineinerstrecken. Die Heizstäbe 26 liegen oberhalb der Ringkammeranordnung in einer horizontalen Ebene benachbart nebeneinander; in der Zeichnung ist nur einer der Heizstäbe 26 gestrichelt angedeutet. Die Heizstäbe 26 erstrecken sich im wesentlichen über die lichte Weite des Gehäuses 12 und sind so beabstandet nebeneinander angeordnet, daß sie in dieser horizontalen Ebene eine im wesentlichen gleichmäßige Wärmezuführung über den gesamten Querschnitt des Gehäuses 12 ermöglichen.

Im Betrieb wird die Niveauregelungsvorrichtung 38 so eingestellt, daß die Phasengrenzfläche zwischen der Phase geringerer Dichte im Kopfbereich 20 und der Phase größerer Dichte im unteren Teil des Gehäuses 12 möglichst nahe der Ebene zu liegen kommt, in der sich die Heizstäbe 26 erstrekken. Dadurch kann die Heizleistung der Heizstäbe 26 unmittelbar in den Phasengrenzbereich eingeleitet werden, der üblicherweise keine glatte horizontale Fläche ist, sondern vielmehr von einer in vertikaler Richtung einigermaßen ausgedehnten Zone gebildet wird, in welcher noch größere Bereiche beider Phasen existieren. Die Beheizung dieses Bereiches beschleunigt die Abtrennung, also das Aufsteigen der Phasenbereiche geringerer Dichte und das Absinken der Phasenbereiche größerer Dichte. Dabei werden Temperaturen bis über 90 °C erreicht.

In einzelnen Anwendungsfällen ergibt sich im Phasengrenzbereich eine so leichte Trennung, daß eine Unterstützung durch Erwärmung nicht erforderlich ist. In solchen Fällen kann auf die Heizvorrichtung ggf. verzichtet werden; ebenso, wenn das zugeführte Flüssigkeitsgemisch beispielsweise prozeßseitig hinreichend vorerwärmt ist.

Beim Betrieb des Ringkammer-Abscheiders ist das Gehäuse 12 vollständig mit Flüssigkeit gefüllt, und im Gehäuse bildet sich ein statischer Flüssigkeitsdruck aus, dessen Größe ausschließlich von der Höhe der Austrittsöffnungen 28,30 abhängt. Der Druck, mit dem die Flüssigkeit dem Einlaß 14 zugeführt wird, muß größer sein als der Flüssigkeitsdruck im Behälter.

**Ansprüche**

1. Ringkammer-Abscheider zum Trennen eines Flüssigkeitsgemisches aus zwei Phasen unterschiedlicher Dichte, insbesondere zum Abscheiden einer organischen Phase aus wässrigem Gemisch, mit einem Gehäuse, in dem mehrere ineinander geschachtelte Ringkammern ausgebildet sind, die einen mehrfach richtungswechselnden Strömungsweg für die zu trennende Flüssigkeit definieren, einer Zuführleitung für die zu trennende Flüssigkeit, einer mit dem Kopfbereich des Gehäuses verbundenen Auslaßleitung für die sich dort sammelnde Phase geringerer Dichte und einer mit dem unteren Bereich des Gehäuses verbundenen Auslaßleitung für die sich dort sammelnde Phase größerer Dichte, sowie mit wenigstens einem im Gehäuse angeordneten Heizelement, dadurch gekennzeichnet, daß

a) beide Auslaßleitungen (16,18) außerhalb des Gehäuses (12) nebeneinander frei aufragen und ständig offen in jeweiligen Austrittsöffnungen (28,30) münden,

b) eine Niveauregelungsvorrichtung (38) vorgesehen ist, die Einrichtungen (40-44) zur Einstellung eines wählbaren Höhenunterschieds zwischen den Austrittsöffnungen (28,30) umfaßt, und

c) alle Heizelemente (26) nur im Kopfbereich (20) des Gehäuses angeordnet sind.

2. Ringkammer-Abscheider nach Anspruch 1, dadurch gekennzeichnet, daß die Niveauregelungsvorrichtung (38) mit der Auslaßleitung (16) für die Phase geringerer Dichte verbunden ist.

3. Ringkammer-Abscheider nach Anspruch 2, dadurch gekennzeichnet, daß die Niveauregelungsvorrichtung (38) zwei sich im wesentlichen in Schwerkraftrichtung erstreckende Rohre (40,42) umfaßt, die teleskopierbar ineinandergeschoben sind.

4. Ringkammer-Abscheider nach Anspruch 3, dadurch gekennzeichnet, daß die Niveauregelungsvorrichtung (38) ein vertikales Mantelrohr (40) umfaßt, dessen unteres Ende mit der Auslaßleitung (16) verbunden ist und ein in das andere, freie Ende des Mantelrohres (40) eingeschobenes Ermetorohr (42) umfaßt, das mit dem freien Ende des Mantelrohres (40) durch eine Ermetoverschraubung (44) dichtend verbunden ist.

5. Ringkammer-Abscheider nach einem der Ansprüche 1 bis 4, dadurch gekennzeichnet, daß die Niveauregelungsvorrichtung (38) oberhalb des Gehäuses (12) angeordnet ist.

6. Ringkammer-Abscheider nach einem der Ansprüche 1 bis 5, dadurch gekennzeichnet, daß beide Auslaßleitungen belüftet sind.

7. Ringkammer-Abscheider nach einem der Ansprüche 1 bis 6, dadurch gekennzeichnet, daß alle Heizelemente (26) länglich ausgebildet sind und sich im wesentlichen senkrecht zur Vertikalachse des Gehäuses (12), insbesondere wenigstens annähernd über dessen gesamte lichte Weite erstrecken.

8. Ringkammer-Abscheider nach Anspruch 7, dadurch gekennzeichnet, daß mehrere, horizontal nebeneinanderliegende Heizelemente (26) vorgesehen sind.

9. Ringkammer-Abscheider nach einem der Ansprüche 1 bis 8, dadurch gekennzeichnet, daß die Heizelemente (26) von elektrischen Heizstäben oder Heizschlangen gebildet werden.